# EUROPEAN PATENT APPLICATION

(11) **EP 2 390 828 A1**
(43) Date of publication of application: **30.11.2011**
(21) Application number: 11167381.0
(22) Date of filing: 25.05.2011
(51) Int. Cl.: G06Q 20/00

(54) **Sales system**

(30) Priority: 28.05.2010 JP 2010122472
(71) Applicant: Funai Electric Co., Ltd., Daito-shi, Osaka 574-0013 (JP)
(72) Inventor: Wakabayashi, Naoyuki, Daito-shi Osaka 574-0013 (JP)
(74) Representative: Grünecker, Kinkeldey, Stockmair & Schwanhäusser

(57) **Abstract**

This sales system (100) includes a personal information management means (42) managing personal information of the user in association with a one-time ID issued by an issuing means (43) and disclosing information other than that allowing specification of the user himself/herself included in personal information corresponding to the one-time ID.

## Description

### BACKGROUND OF THE INVENTION

### Field of the Invention

The present invention relates to a sales system, and more particularly, it relates to a sales system performing a commercial transaction through a network.

### Description of the Background Art

A sales system performing a commercial transaction through a network is known in general, as disclosed in Japanese Patent No. 4071445, for example.

The aforementioned Japanese Patent No. 4071445 discloses a transaction intermediary system (sales system), including a portable telephone (user terminal) of the user, a transaction intermediary server and a shop server (sales machine), so formed that the transaction intermediary server issues a one-time temporary password to the user when authenticating him/her. This transaction intermediary system is so formed that, when the user asks the shop server to sell a product to him/her with the issued temporary password, the shop server transmits the received temporary password to the transaction intermediary server and requests the transaction intermediary server to determine the validity of the user (to authenticate the user). When the transaction intermediary server confirms the validity of the user, the shop server is paid for the product after delivering the same. Thus, the commercial transaction is performed with the one-time temporary password in the transaction intermediary system according to the aforementioned Japanese Patent No. 4071445 so that the shop (sales company) does not specify the user, whereby accumulation and leakage of information about the user can be suppressed.

While the transaction intermediary system according to the aforementioned Japanese Patent No. 4071445 can suppress accumulation and leakage of the information about the user, however, the shop (sales company) is kept completely uninformed about the personal information of the user, and hence the same cannot provide a service suitable for the user.

In this respect, a sales system allowing a sales company to provide a service suitable for the user while suppressing accumulation and leakage of information about the user is proposed in general, as disclosed in Japanese Patent Laying-Open No. 2007-58847, for example.

The aforementioned Japanese Patent Laying-Open No. 2007-58847 discloses a transaction system (sales system), including a user terminal, an authentication server and a product distributor terminal (sales machine), so formed that the authentication server issues one-time temporary information to the user when authenticating him/her. This transaction system is so formed that, when the user follows the procedure of purchasing a product from the product distributor with the issued temporary information and requests the authentication server to transmit a price information ID for the product to be purchased, the authentication server transmits the price information ID to the user terminal and the product distributor terminal as an ID, different from the temporary information, dedicated to payment for the product. The user pays for the product with the received price information ID dedicated to the payment for the product. Further, the transaction system according to the aforementioned Japanese Patent Laying-Open No. 2007-58847 is so formed that the same can disclose information (generation information, for example) previously authorized by the user to an authenticated product distributor (sales company). Thus, the one-time temporary information and the price information ID for the payment are employed in the transaction system according to the aforementioned Japanese Patent Laying-Open No. 2007-58847 so that the product distributor (sales company) does not specify the user, whereby accumulation and leakage of information about the user can be suppressed. Further, the transaction system according to the aforementioned Japanese Patent Laying-Open No. 2007-58847 discloses the information authorized by the user to the product distributor (sales company), so that the product distributor can provide the service suitable for the user.

While the transaction system (sales system) according to the aforementioned Japanese Patent Laying-Open No. 2007-58847 can suppress accumulation and leakage of the information about the user and allows the product distributor (sales company) to provide the service suitable for the user, however, the user must employ the one-time temporary information in order to purchase the product and employ the price information ID, different from the temporary information, dedicated to the payment in order to pay for the product, and hence he/she must use two different identification data (IDs) for different applications respectively. Therefore, the procedure for the commercial transaction is disadvantageously complicated.

### SUMMARY OF THE INVENTION

The present invention has been proposed in order to solve the aforementioned problems, and an object of the present invention is to provide a sales system capable of suppressing accumulation and leakage of information about the user and allowing a sales company to provide a service suitable for the user while suppressing complication of procedure for a commercial transaction.

A sales system according to an aspect of the present invention includes a user terminal, a system management device authenticating the user and a sales machine of a sales company formed to be connectable to the user terminal through a network for selling a product to the user through the network, while the system management device includes an issuing means issuing a different one-time ID to the authenticated user every transaction, a payment request accepting means accepting a payment request when the user purchases the product from the sales company through the network with the one-time ID issued by the issuing means and the sales company makes the payment request for the purchased product with the one-time ID, a payment means paying for the purchased product on behalf of the user in response to the payment request accepted by the payment request accepting means and a personal information management means managing personal information of the user in association with the one-time ID issued by the issuing means and disclosing information other than information allowing specification of the user himself/herself included in the personal information associated with the one-time ID to the sales company when the user accesses the sales company through the network with at least the one-time ID.

In the sales system according to the aspect, as hereinabove described, the system management device is provided with the issuing means issuing a different one-time ID to the authenticated user every transaction, the payment request accepting means accepting the payment request when the user purchases the product from the sales company through the network with the one-time ID issued by the issuing means and the sales company makes the payment request for the purchased product with the one-time ID and the payment means paying for the purchased product on behalf of the user in response to the payment request accepted by the payment request accepting means so that the user purchases the product from the sales company and the system management device pays for the product to the sales company with a different one-time ID every transaction, whereby the sales company can be inhibited from specifying the user himself/herself. Consequently, accumulation and leakage of information about the user can be suppressed. Further, the user purchases the product from the sales company and the system management device pays for the product to the sales company with the common one-time ID, whereby complication of the procedure for the commercial transaction can be suppressed, dissimilarly to a case where different identification data (IDs) are employed for different applications respectively. In addition, the system management device is provided with the personal information management means disclosing the information other than that allowing specification of the user himself/herself included in the personal information associated with the one-time ID when the user accesses the sales company through the network with the one-time ID so that the personal information management means can disclose only the information other than that allowing specification of the user himself/herself without disclosing the latter information, whereby the sales company can provide a service suitable for the user on the basis of the disclosed personal information. Thus, the sales system can suppress accumulation and leakage of the information about the user, and can allow the sales company to provide the service suitable for the user while suppressing complication of the procedure for the commercial transaction.

In the aforementioned sales system according to the aspect, the issuing means preferably issues a one-time password corresponding to the one-time ID to the authenticated user in addition to the one-time ID, and the payment request accepting means is preferably formed to accept the payment request when the user purchases the product from the sales company through the network with the one-time ID and the one-time password issued by the issuing means and the sales company makes the payment request for the purchased product with the one-time ID and the one-time password. According to this structure, the user purchases the product from the sales company and the system management device pays for the product to the sales company with both of the one-time ID and the one-time password corresponding thereto, whereby security of the sales system can be more improved as compared with a case where the commercial transaction is performed only with the one-time ID. Consequently, leakage of the information can be more suppressed.

The aforementioned sales system according to the aspect is preferably so formed that the user selects information authorized as disclosable to the sales company by the personal information management means from the information other than the information allowing specification of the user himself/herself. According to this structure, the personal information management means can keep any information undisclosed to the sales company when the user wishes to keep the same undisclosed, even if this information does not allow specification of the user himself/herself.

In this case, the personal information management means is preferably formed to select information to be disclosed to the sales company from the information authorized by the user as disclosable, in response to credibility of the sales company based on a prescribed criterion. According to this structure, the personal information management means can keep any information undisclosed when the credibility of the sales company is low, for example, even if the user authorizes the information as disclosable. Thus, the personal information management means can automatically limit the quantity of disclosable information in response to the credibility of the sales company without requiring the user to determine the credibility of the sales company, whereby leakage of the information can be more suppressed.

In the aforementioned structure having the personal information management means selecting the information to be disclosed to the sales company in response to the credibility of the sales company, the personal information management means is preferably formed to select the information to be disclosed to the sales company from the information authorized by the user as disclosable on the basis of the credibility of the sales company based on at least evaluation by the user as the prescribed criterion. According to this structure, the personal information management means selects the disclosable information in response to the credibility of the sales company as viewed from the user, whereby the same can increase the quantity of information disclosed to a sales company credible for the user while reducing the quantity of information disclosed to a sales company noncredible for the user.

In the aforementioned structure enabling the user to select the information disclosable to the sales company, the sales system is preferably so formed that the user can change the information authorized as disclosable to the sales company in the information other than the information allowing specification of the user himself/herself. According to this structure, the user can change any information to be undisclosable (disclosable), even if he/she has once authorized the same as disclosable (undisclosable). Thus, the user can freely change whether or not to authorize the information as disclosable, whereby the user's convenience can be improved.

In the aforementioned sales system according to the aspect, the personal information management means is preferably formed to manage the personal information including at least purchase information of the user and to accumulate the personal information including the purchase information. According to this structure, the sales company can obtain information about the user's purchase history in which the purchase information is accumulated from the personal information management means. When the personal information management means discloses the information about the user's purchase history to the sales company, therefore, the sales company can provide a service suitable for the user on the basis of the purchase history.

In the aforementioned sales system according to the aspect, the system management device preferably further includes a destination information request accepting means accepting a destination information request when a carrier for delivering the purchased product to the user acquires the one-time ID corresponding to the purchased product from the sales company and makes the destination information request about the destination of the purchased product with the one-time ID and a destination information posting means posting destination information about the purchased product to the carrier in response to the destination information request accepted by the destination information request accepting means. According to this structure, the common one-time ID employed by the system management device for the payment to the sales company is employed also for the procedure between the sales company and the carrier as well as the procedure between the carrier and the system management device, whereby complication of the procedure can be suppressed also when the carrier delivers the product.

In this case, the sales system is preferably so formed that the issuing means issues the one-time password corresponding to the one-time ID to the authenticated user in addition to the one-time ID while the destination information request accepting means accepts the payment information request made by the carrier for the purchased product with the one-time ID without employing the one-time password if the payment request accepting means accepts the payment request when the user purchases the product from the sales company through the network with the one-time ID and the one-time password issued by the issuing means and the sales company makes the payment request for the purchased product with the one-time ID and the one-time password. According to this structure, the user purchases the product from the sales company and the system management device pays for the product to the sales company with both of the one-time ID and the one-time password thereby more improving the security of the sales system while the procedure between the carrier and the system management device can be simplified by employing only the common one-time ID without employing the common one-time password.

In the aforementioned sales system according to the aspect, the system management device further includes a proxy server connectable to the user terminal and the sales machine through the network, and the sales system is preferably so formed that the user can purchase the product from the sales company through the network with at least the one-time ID issued by the issuing means in a state where the user terminal is connected to the sales machine through the proxy server. According to this structure, the sales company can be inhibited from specifying an identification number (IP address, for example) of the user terminal dissimilarly to a case where the user terminal is connected to the sales machine of the sales company without through the proxy server, whereby the sales company can be effectively inhibited from specifying the user himself/herself on the basis of the IP address or the like.

In the aforementioned sales system according to the aspect, the user terminal is preferably so formed that the user can acquire the product, purchased from the sales company, from the sales machine through the network. According to this structure, the user can directly acquire the purchased product from the sales machine of the sales company through no carrier, so far as the purchased product is contents data or the like of music or images acquirable through the network. Thus, the user may not post his/her personal information such as his/her name and address allowing specification of himself/herself to any carrier, whereby leakage of the user's personal information can be further suppressed.

In the aforementioned sales system according to the aspect, the issuing means of the system management device is preferably formed to issue at least the one-time ID on the basis of the user's operation of selecting the sales company from a sales company selection screen of the system management device in the state authenticated by the system management device. According to this structure, the issuing means issues the one-time ID simply when the user selects the sales company from the sales company selection screen, whereby the user may not request the system management device to issue the one-time ID, and the burden on him/her can be reduced.

In this case, the issuing means of the system management device is preferably formed to issue at least a different one-time ID every time the user selects a different sales company from the sales company selection screen of the system management device in the state authenticated by the system management device. According to this structure, the issuing means reliably issues a different one-time ID every transaction when the user continuously purchases products from different sales companies, whereby each sales company can be effectively inhibited from specifying the user himself/herself.

In the aforementioned sales system according to the aspect, the one-time ID is preferably usable only within a prescribed time from the issuance by the issuing means. According to this structure, the one-time ID can be prevented from illegal use, whereby the security of the sales system can be more improved.

In this case, the one-time ID is preferably rendered unusable when the system management device cancels the authentication of the user, even if the prescribed time has not yet elapsed. According to this structure, the one-time ID cannot be used if the user operates the system management device to cancel the authentication, whereby the one-time ID can be more effectively prevented from illegal use, and the security of the sales system can be more improved.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing the overall structure of a sales system according to each of first to third embodiments of the present invention;
Fig. 2 illustrates a personal information table of the sales system according to each of the first to third embodiments of the present invention;
Fig. 3 illustrates a sales company selection screen of the sales system according to each of the first to third embodiments of the present invention;
Fig. 4 is a flow chart showing processing for issuing a one-time ID and a one-time PW in the sales system according to each of the first to third embodiments of the present invention;
Fig. 5 is a flow chart showing operations performed by respective portions when the user purchases a product in the sales system according to the first embodiment of the present invention;
Fig. 6 is a schematic diagram showing the operations performed by the respective portions when the user purchases the product in the sales system according to the first embodiment of the present invention;
Fig. 7 is a flow chart showing operations performed by respective portions when the user purchases a product in the sales system according to the second embodiment of the present invention;
Fig. 8 is a schematic diagram showing the operations performed by the respective portions when the user purchases the product in the sales system according to the second embodiment of the present invention;
Fig. 9 is a flow chart showing operations performed by respective portions when the user purchases a product in the sales system according to the third embodiment of the present invention; and
Fig. 10 is a schematic diagram showing the operations performed by the respective portions when the user purchases the product in the sales system according to the third embodiment of the present invention.

### DESCRIPTION OF THE PREFERRED EMBODIMENTS

Embodiments of the present invention are now described with reference to the drawings.

### (First Embodiment)

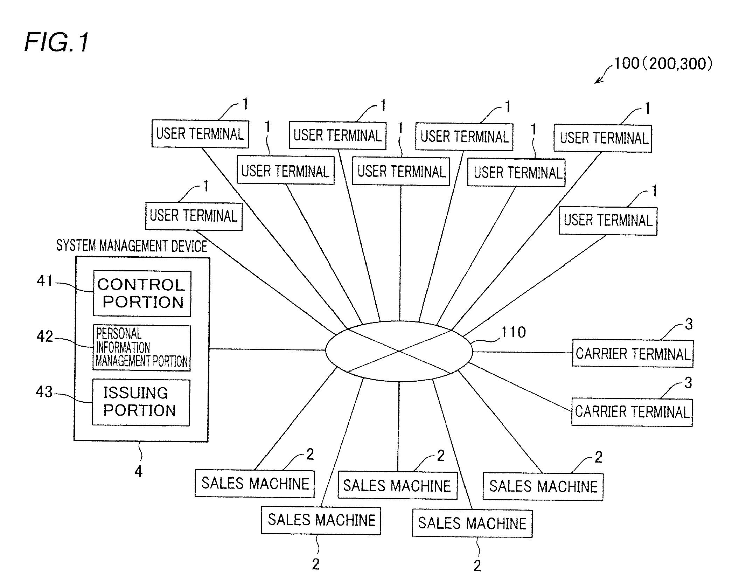

The structure of a sales system 100 according to a first embodiment of the present invention is described with reference to Figs. 1 to 3.

In the sales system 100 according to the first embodiment of the present invention, user terminals 1 of a plurality of users, sales machines 2 of a plurality of sales companies, carrier terminals 3 of a plurality of carriers and a system management device 4 are connected to be capable of communicating with each other through the Internet 110, as shown in Fig. 1. In the sales system 100 according to the first embodiment, each user can purchase a product from any sales company, and can receive the purchased product from any carrier. In this case, the user purchases the product from the sales company with a one-time ID (identification) issued by the system management device 4 and a one-time PW (password) corresponding to the one-time ID. The Internet 110 is an example of the "network" in the present invention.

The sales system 100 according to the first embodiment is now described in more detail.

Each user terminal 1 is a PC or a portable information terminal, which is formed to be connectable to the Internet 110. Further, the user terminal 1 is formed to be capable of accessing the system management device 4 and the sales machines 2 through the Internet 110. Each user previously acquires a fixed authentication ID (identification) issued by the system management device 4 and a PW (password) corresponding to the authentication ID before purchasing any product from any sales company through the Internet 110.

Each sales machine 2 is a PC or a server, which is formed to be connectable to the Internet 110. Further, the sales machine 2 is formed to be capable of accessing the carrier terminals 3 and the system management device 4 through the Internet 110. Each sales company utilizing the sales system 100 according to the first embodiment of the present invention must previously enter information into the system management device 4. The sales company already entering the information into the system management device 4 sells products in a state browsable on the Internet 110 to any user authenticated by the system management device 4 (authorized to log on to the sales system 100).

Each carrier terminal 3 is a PC or a server, which is formed to be connectable to the Internet 110. The carrier terminal 3 is formed to be capable of accessing the system management device 4 through the Internet 110.

The system management device 4 includes a control portion 41, a personal information management portion 42 and an issuing portion 43. The control portion 41 has a function of controlling operations of the respective portions of the system management device 4. The control portion 41 is formed to authenticate any user (authorize him/her to log on to the sales system 100) when he/she can correctly input a fixed authentication ID issued by the issuing portion 43 and a PW corresponding to the fixed authentication ID.

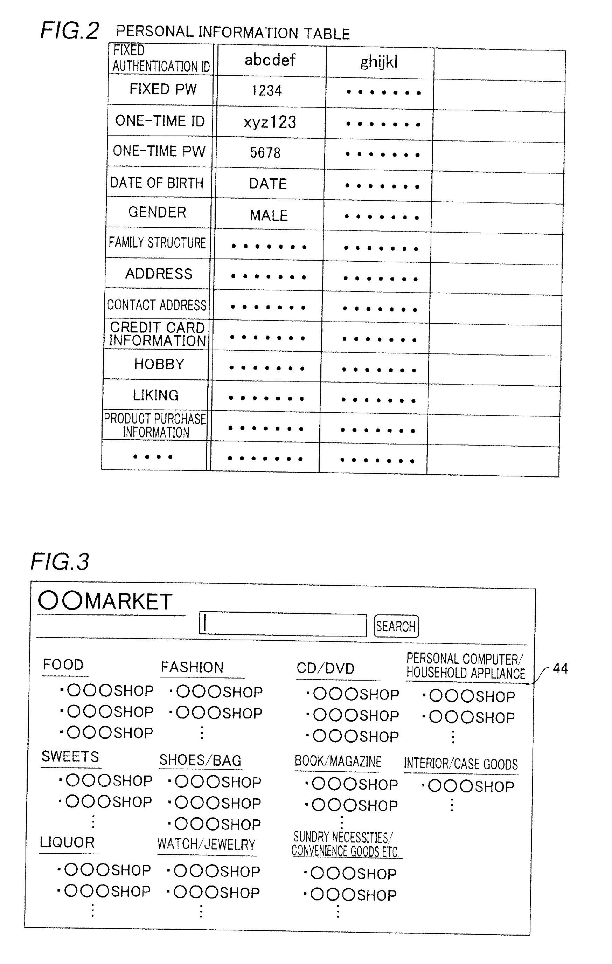

The personal information management portion 42 is formed to manage personal information of the users by storing a personal information table. More specifically, the personal information management portion 42 is formed to store personal information such as the name, date of birth, gender, family structure, address, contact address, credit card information, hobby, liking, product purchase information etc. of each user in association with the fixed authentication ID in the personal information table, as shown in Fig. 2. The personal information table also includes information as to a one-time ID issued by the issuing portion 43 and a one-time PW corresponding thereto. In other words, the personal information management portion 42 manages the personal information about each user in association with the one-time ID issued by the issuing portion 43. The one-time ID and the one-time PW stored in the personal information table are rewritten every time the issuing portion 43 issues a new one-time ID and a new one-time PW respectively. The personal information management portion 42 is formed to be capable of accumulating the personal information, and stores the product purchase information etc. as accumulated information (purchase history information). The personal information management portion 42 is an example of the "personal information management means" in the present invention.

The issuing portion 43 has the function of issuing the fixed authentication ID and the PW (password) corresponding thereto to each user. More specifically, the issuing portion 43 is formed to issue the fixed authentication ID and the PW (password) corresponding thereto to each user when the system management device 4 acquires the personal information such as the name, date of birth, gender, family structure, address, contact address (telephone number, mail address or the like), credit card information (card number, expiration date etc.), hobby, liking and the like from the user. More specifically, the issuing portion 43 issues the fixed authentication ID and the PW (password) corresponding thereto to the user when the system management device 4 acquires personal information, at least the name, date of birth and address, for example, allowing specification of the user himself/herself. The issuing portion 43 is formed to issue the fixed authentication ID and the PW (password) corresponding thereto to the user when the user logging on to the sales system 100 selects a sales company registered in the system management device 4 from a sales company selection screen 44 (see Fig. 3). The issuing portion 43 may decide the one-time ID and the one-time PW either at random or according to a prescribed rule. Further, the issuing portion 43 is formed to issue a new one-time ID and a new one-time PW corresponding thereto every time the user selects a new sales company. In other words, the issuing portion 43 issues a different one-time ID and a different one-time PW corresponding thereto every transaction. The one-time ID and the one-time PW corresponding thereto are usable only within a prescribed time (60 minutes, for example) from the issuance thereof, and rendered unusable when the user once logs out (the system management device 4 cancels the authentication of the user), even if the prescribed time has not yet elapsed. In this case, the user can acquire a new one-time ID and a new one-time PW corresponding thereto by logging on to the sales system 100 again and selecting a new sales company. The issuing portion 43 is an example of the "issuing means" in the present invention.

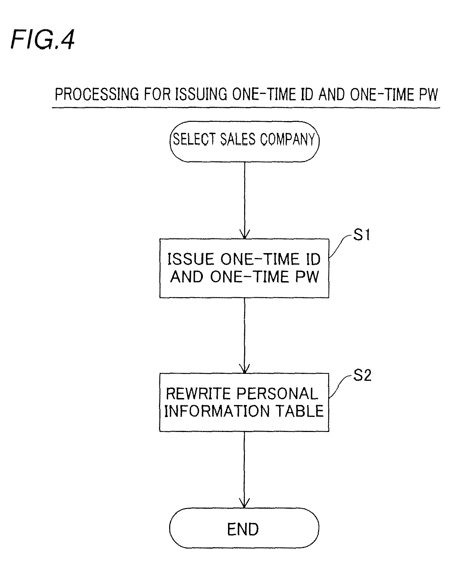

Processing for issuing a one-time ID and a one-time PW in the sales system 100 according to the first embodiment of the present invention is now described with reference to Figs. 3 and 4.

When the user logging on to the sales system 100 selects any sales company on the sales company selection screen 44 (see Fig. 3), the control portion 41 executes the processing for issuing a one-time ID and a one-time PW. At a step S1, the control portion 41 controls the issuing portion 43 to issue a one-time ID and a one-time PW corresponding thereto to the user. At a step S2, the control portion 41 controls the personal information management portion 42 to update the personal information table (see Fig. 2) by rewriting the columns of the one-time ID and the one-time PW therein.

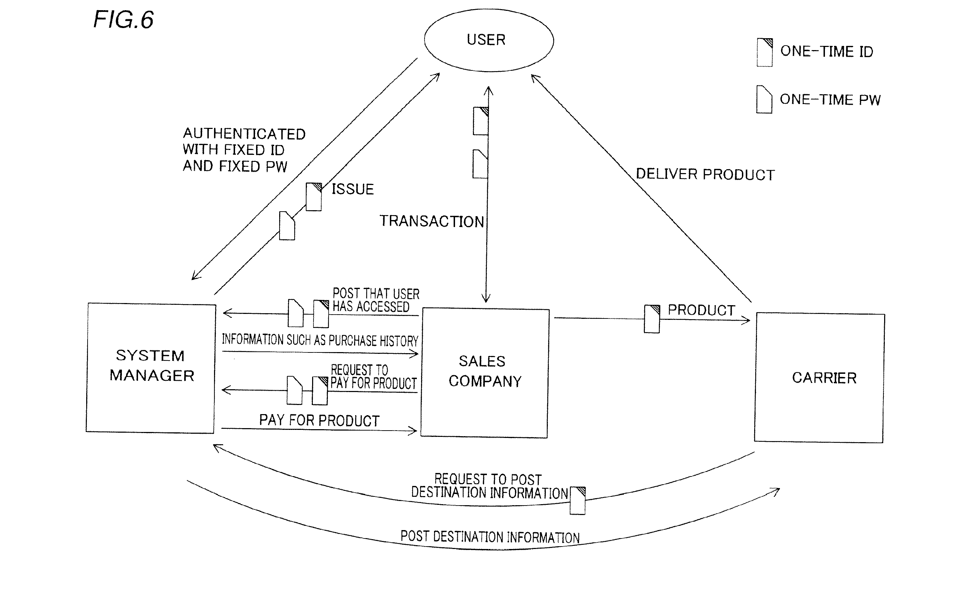

Processing performed by each portion of the sales system 100 when the user purchases a product is now described with reference to Figs. 2, 5 and 6.

When the user accesses any sales machine 2 from his/her user terminal 1 with the one-time ID and the one-time PW issued by the issuing portion 43 at a step S11, the accessed sales machine 2 posts the system management device 4 that the user has accessed the same with the one-time ID and the one-time PW at a step S12.

If the one-time ID and the one-time PW received from the sales machine 2 are a valid ID issued by the issuing portion 43 and a one-time PW corresponding thereto respectively, the system management device 4 posts information, included in the personal information of the user corresponding to the one-time ID, other than that allowing specification of the user himself/herself to the sales machine 2 according to the personal information management portion 42 at a step S13. At this time, the system management device 4 posts information previously authorized by the user as disclosable to the sales company in the information included in the personal information table shown in Fig. 2. The user can select the information authorized as disclosable to the sales company from the information (hobby, liking and purchase history of the user), included in the personal information table, other than the information allowing specification of the user himself/herself on a set screen (not shown) in the state logging on to the system management device 4. Further, the user can change the information authorized as disclosable any number of times, whenever he/she likes. At this time, the personal information management portion 42 of the system management device 4 may not post the information authorized by the user as disclosable to the sales machine 2, depending on credibility of the sales company. More specifically, the system management device 4 has a function of determining the credibility of the sales company on the basis of evaluation by the user, past transaction records of the sales company and the like, and selects the information to be posted to the sales machine 2 in response to the credibility of the sales company according to the personal information management portion 42. For example, the system management device 4 entirely posts the information authorized by the user as disclosable to a sales company having credibility higher than the average, and only partially posts the information (only the hobby, for example) authorized by the user as disclosable to a sales company having credibility lower than the average.

When receiving the information other than that allowing specification of the user himself/herself from the system management device 4, the sales machine 2 provides a service suitable for the user on the basis of the received information at a step S14. For example, the sales machine 2 can display advertisement of products likely to attract the user's interest on the basis of the user's product purchase information and the information about his/her hobby posted thereto.

If the user instructs his/her user terminal 1 to purchase any product from the sales machine 2 at a step S15, the sales machine 2 requests the system management device 4 to pay for the product with the one-time ID and the one-time PW of the user purchasing the product at a step S16.

The system management device 4 accepts the payment request received from the sales machine 2 by the control portion 41, which in turn pays for the product with a credit card corresponding to the one-time ID on behalf of the user at a step S17. The control portion 41 is an example of the "payment request accepting means" or the "payment means" in the present invention.

Thereafter the sales company sends the product to any of the carriers with the one-time ID at a step S18. At this time, the sales company attaches only the one-time ID to the product, without attaching the one-time PW.

When receiving the product and the one-time ID, the carrier requests the system management device 4 to post destination information about the product to the carrier terminal 3 with the received one-time ID at a step S19.

The system management device 4 accepts the destination information request about the product by the control portion 41, which in turn acquires the destination information (name, address, contact address etc.) corresponding to the one-time ID from the personal information table and posts the same to the carrier terminal 3 at a step S20. The control portion 41 is an example of the "destination information request accepting means" or the "destination information posting means" in the present invention.

Thereafter the carrier delivers the product to the user on the basis of the posted product destination information at a step S21.

According to the first embodiment, as hereinabove described, the system management device 4 is provided with the issuing portion 43 issuing a different one-time ID and a different one-time PW to each authenticated user every transaction and the control portion 41 accepting a payment request when any user purchases a product from any sales company through the Internet 110 with the one-time ID and the one-time PW issued by the issuing portion 43 and the sales company makes the payment request for the purchased product with the one-time ID and the one-time PW and paying for the purchased product on behalf of the user so that the user purchases the product from the sales company and the system management device 4 pays for the product to the sales company with a different one-time ID and a different one-time PW every transaction, whereby the sales company can be inhibited from specifying the user himself/herself. Consequently, accumulation and leakage of information about the user can be suppressed. Further, the user purchases the product from the sales company and the system management device 4 pays for the product to the sales company with the common one-time ID and the common one-time PW, whereby complication of the procedure for commercial transaction can be suppressed, dissimilarly to a case where a plurality of identification data (IDs) are employed for different applications respectively. The system management device 4 is also provided with the personal information management portion 42 disclosing the information other than that allowing specification of the user himself/herself included in the personal information corresponding to the one-time ID and the one-time PW when the user accesses the sales company through the Internet 110 with the one-time ID and the one-time PW so that the same can disclose only the information other than that allowing specification of the user himself/herself to the sales company, whereby the sales company can provide a service suitable for the user on the basis of the disclosed personal information. Therefore, the sales system 100 can suppress accumulation and leakage of the information about the user, and can allow the sales company to provide the service suitable for the user while suppressing complication of the procedure for the commercial transaction.

According to the first embodiment, as hereinabove described, the sales system 100 is so formed that the issuing portion 43 issues the one-time PW corresponding to the one-time ID to the authenticated user in addition to the one-time ID and the control portion 41 accepts the payment request when the user purchases the product from the sales company through the Internet 110 with the one-time ID and the one-time PW issued by the issuing portion 43 and the sales company makes the payment request for the purchased product with the one-time ID and the one-time PW so that the user purchases the product from the sales company and the system management device 4 pays for the product to the sales company with both of the one-time ID and the one-time PW corresponding thereto, whereby the security of the sales system 100 can be more improved as compared with a case where only the one-time ID is employed. Consequently, leakage of the information can be further suppressed.

According to the first embodiment, as hereinabove described, the sales system 100 is so formed that the user can select the information authorized as disclosable to the sales company through the personal information management portion 42 from the information other than that allowing specification of the user himself/herself, whereby the personal information management portion 42 can keep any information undisclosed to the sales company when the user wishes to keep the same undisclosed, even if this information does not allow specification of the user himself/herself.

According to the first embodiment, as hereinabove described, the personal information management portion 42 is formed to select the information disclosable to the sales company from the information authorized by the user as disclosable in response to the credibility of the sales company based on the prescribed criterion, whereby the same can keep any information undisclosed when the credibility of the sales company is low, for example, even if the user authorizes the information as disclosable. Thus, the personal information management portion 42 can automatically limit the quantity of disclosable information in response to the credibility of the sales company without requiring the user to determine the credibility of the sales company, whereby leakage of information can be more suppressed.

According to the first embodiment, as hereinabove described, the personal information management portion 42 is formed to select the information disclosable to the sales company from the information authorized by the user as disclosable in response to the credibility of the sales company based on the user's evaluation. Thus, the personal information management portion 42 selects the disclosable information in response to the credibility of the sales company as viewed from the user, whereby the same can increase the quantity of information disclosed to a sales company credible for the user while reducing the quantity of information disclosed to a sales company noncredible for the user.

According to the first embodiment, as hereinabove described, the sales system 100 is so formed that the user can change the information authorized as disclosable to the sales company in the information other than that allowing specification of the user himself/herself, whereby he/she can change any information to be undisclosable (disclosable), even if he/she has once authorized (not authorized) the same as disclosable (undisclosable). Thus, the user can freely change whether or not to authorize the information as disclosable, whereby the user's convenience can be improved.

According to the first embodiment, as hereinabove described, the personal information management portion 42 is formed to manage the personal information including the user's purchase information and to accumulate the personal information including the purchase information, whereby the sales company can obtain information about the user's purchase history in which the purchase information is accumulated from the personal information management device 42. When the personal information management device 42 discloses the information about the user's purchase history to the sales company, therefore, the sales company can provide a service suitable for the user on the basis of the purchase history.

According to the first embodiment, as hereinabove described, the control portion 41 is formed to accept the destination information request and to post the destination information about the purchased product to the carrier in response to the accepted destination information request when the carrier for delivering the purchased product to the user acquires the one-time ID corresponding to the purchased product from the sales company and makes the destination information request with the one-time ID so that the common one-time ID employed by the system management device 4 for the payment to the sales company is employed also for the procedure between the sales company and the carrier as well as the procedure between the carrier and the system management device 4, whereby complication of the procedure can be suppressed also when the carrier delivers the product.

According to the first embodiment, as hereinabove described, the control portion 41 is formed to accept the destination information request when the carrier makes the destination information request as to the purchased product with the one-time ID without employing the one-time PW, whereby the user purchases the product from the sales company and the system management device 4 pays for the product to the sales company with both of the one-time ID and the one-time password thereby more improving the security of the sales system 100 while the procedure between the carrier and the system management device 4 can be simplified by employing only the common one-time ID without employing the common one-time password.

According to the first embodiment, as hereinabove described, the issuing portion 43 is formed to issue the one-time ID and the one-time PW on the basis of the user's operation of selecting the sales company from the sales company selection screen 44 of the system management device 4 in the state authenticated by the system management device 4 so that the same issues the one-time ID and the one-time PW simply when the user selects the sales company from the sales company selection screen 44, whereby the user may not request the system management device 4 to issue the one-time ID and the one-time PW, and the burden on him/her can be reduced.

According to the first embodiment, as hereinabove described, the issuing portion 43 is formed to issue a different one-time ID and a different one-time PW every time the user selects a different sales company from the sales company selection screen 44 of the system management device 4 in the state authenticated by the system management device 4 so that the same reliably issues a different one-time ID and a different one-time PW every transaction when the user continuously purchases products from different sales companies, whereby each sales company can be effectively inhibited from specifying the user himself/herself and accumulating his/her information.

According to the first embodiment, as hereinabove described, the one-time ID is rendered usable only within the prescribed time from the issuance by the issuing portion 43. Thus, the one-time ID can be prevented from illegal use, whereby the security of the sales system 100 can be more improved.

According to the first embodiment, as hereinabove described, the one-time ID is rendered unusable when the system management device 4 cancels the authentication of the user, even if the prescribed time has not yet elapsed. Thus, the one-time ID cannot be used if the user operates the system management device 4 to cancel the authentication, whereby the one-time ID can be more effectively prevented from illegal use, and the security of the sales system 100 can be more improved.

According to the first embodiment, as hereinabove described, the system management device 4 is formed to authenticate the user with the fixed authentication ID different from the one-time ID. Thus, the system management device 4 can easily authenticate the user with the fixed authentication ID.

According to the first embodiment, as hereinabove described, the issuing portion 43 is formed to issue the fixed authentication ID when the system management device 4 acquires the personal information allowing specification of the user himself/herself. Thus, the issuing portion 43 can be inhibited from indiscriminately issuing the fixed authentication ID, whereby the security of the sales system 100 can be more improved.

### (Second Embodiment)

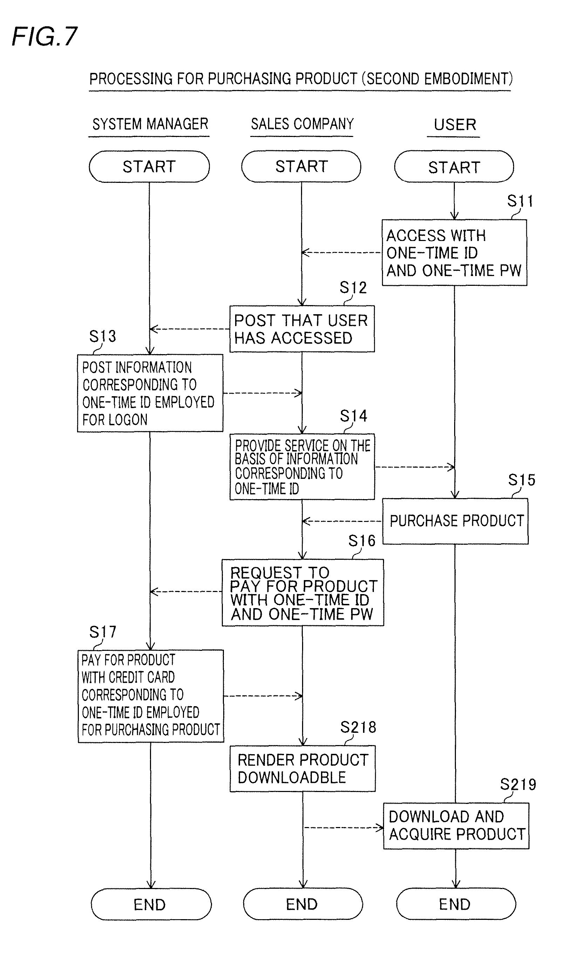

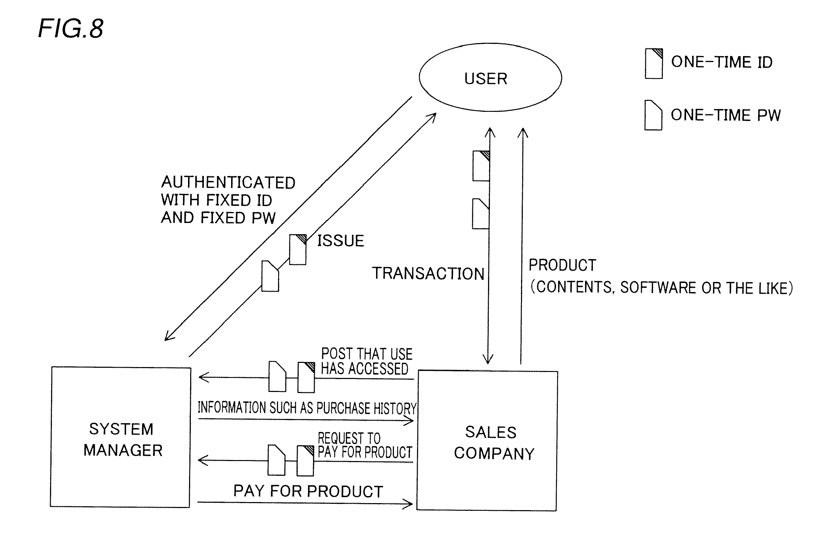

A second embodiment of the present invention is now described with reference to Figs. 7 and 8. A sales system 200 according to the second embodiment of the present invention is so formed that the user can acquire a product from any sales machine 2 through the Internet 110 with a user terminal 1 as shown in Fig. 8, dissimilarly to the sales system 100 according to the aforementioned first embodiment so formed that the carrier delivers the product to the user.

The sales system 200 according to the second embodiment of the present invention is so formed that the user purchasing the product (contents data or software of music or images) from any sales company can acquire the purchased product from the sales machine 2 of the sales company through the Internet 110 with the user terminal 1. More specifically, the sales machine 2 is formed to render the product purchased by the user downloadable with the user terminal 1 when the user legally purchases the product (contents data or software of music or images). Thus, the user can download and acquire the purchased product from the sales machine 2 through the Internet 110 with the user terminal 1.

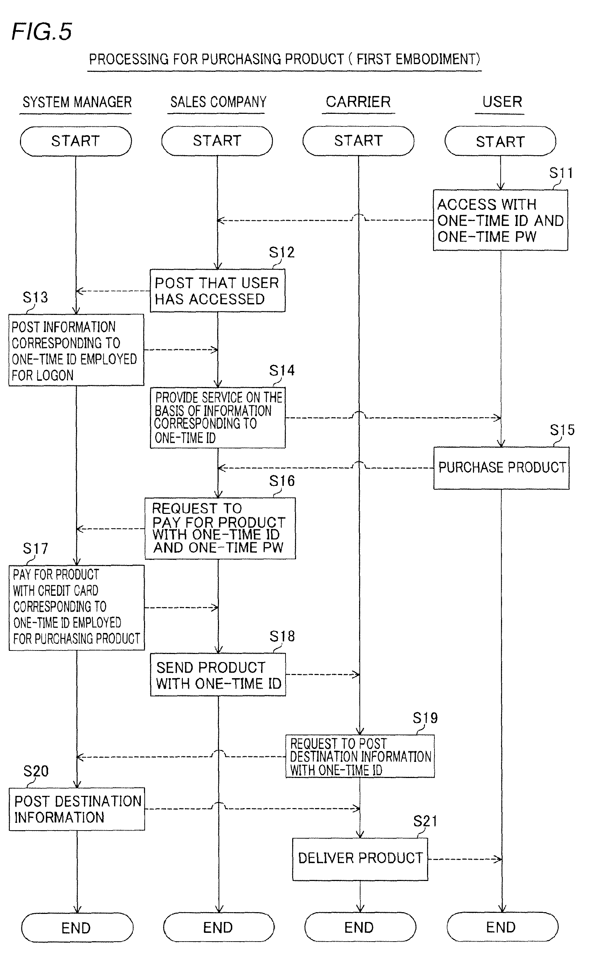

Operations performed by respective portions of the sales system 200 according to the second embodiment of the present invention when the user purchases the product are now described with reference to Figs. 7 and 8. Steps similar to those shown in Fig. 5 carried out in the sales system 100 according to the aforementioned first embodiment when the user purchases the product are denoted by the same symbols in Fig. 7, and redundant description is not repeated.

After a control portion 41 of a system management device 4 pays for the purchased product with a credit card corresponding to a one-time ID issued to the user on behalf of the user at a step S17, the sales machine 2 renders the purchased product downloadable from the sales machine 2 with the user terminal 1 of the user purchasing the product (contents data or software of music or images) at a step S218.

Thus, the user downloads and acquires the purchased product (contents data or software of music or images) from the sales machine 2 with the user terminal 1 at a step S219.

The remaining structure of the second embodiment is similar to that of the aforementioned first embodiment.

According to the second embodiment, as hereinabove described, the user terminal 1 is so formed that the user can acquire the product purchased from the sales company from the sales company 2 through the Internet 110, whereby the user can directly acquire the purchased product from the sales machine 2 of the sales company through no carrier, so far as the purchased product is contents data or the like of music or images acquirable through the Internet 110. Thus, the user may not post his/her personal information such as his/her name and address allowing specification of himself/herself to any carrier, whereby leakage of the user's personal information can be further suppressed.

The remaining effects of the second embodiment are similar to those of the aforementioned first embodiment.

### (Third Embodiment)

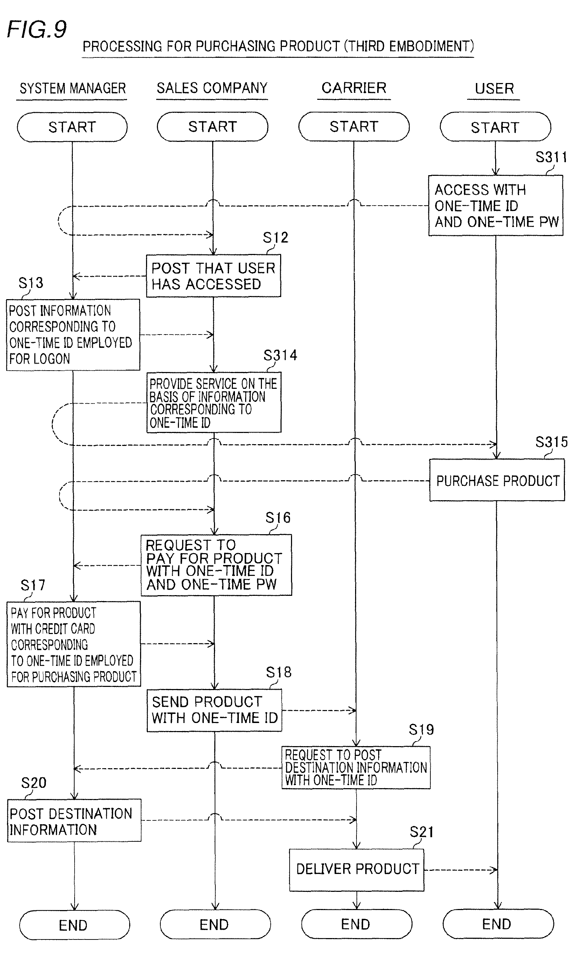

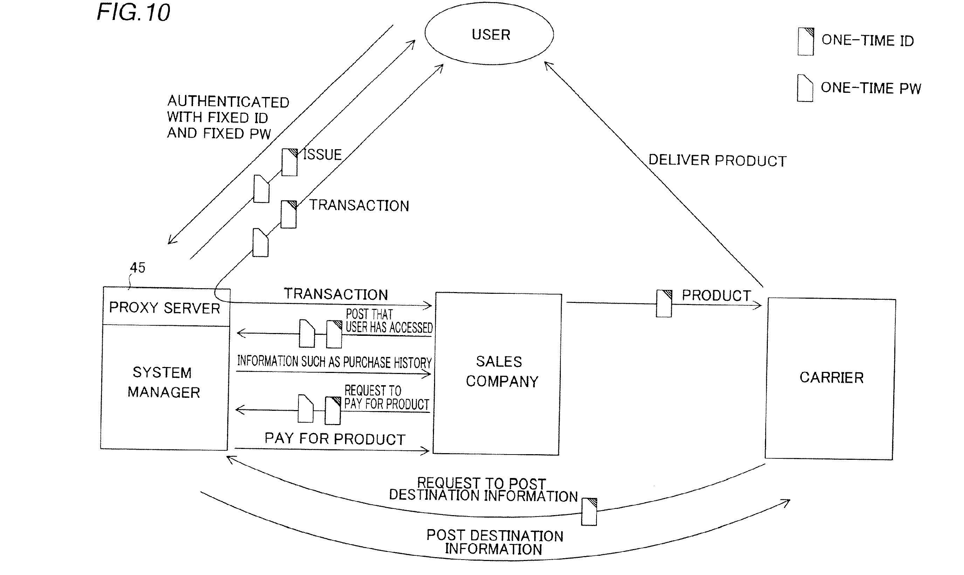

A third embodiment of the present invention is now described with reference to Figs. 9 and 10. A sales system 300 according to the third embodiment of the present invention is so formed that any user terminal 1 is connected to any sales machine 2 through a proxy server 45 of a system management device 4 as shown in Fig. 10, dissimilarly to the sales system 100 according to the aforementioned first embodiment in which the user terminals 1 and the sales machines 2 are connected to each other without through the system management device 4.

In the sales system 300 according to the third embodiment of the present invention, the system management device 4 includes the proxy server 45 connectable to the user terminal 1 and the sales machine 2 through the Internet 110. According to the sales system 300, the user can purchase a product from a sales company and can receive the purchased product from a carrier in a state connecting the user terminal 1 to the sales machine 2 of the sales company through the proxy server 45.

More specifically, the system management device 4 includes the proxy server 45 connectable to the user terminal 1 and the sales machine 2 through the Internet 110. When the user accesses the sales machine 2 of the sales company with the user terminal 1, the user terminal 1 is connected to the sales machine 2 through the proxy server 45 of the system management device 4, as shown in Fig. 10.

Operations performed by respective portions of the sales system 300 according to the third embodiment of the present invention when the user purchases the product are now described with reference to Figs. 9 and 10. Steps similar to those shown in Fig. 5 carried out in the sales system 100 according to the aforementioned first embodiment when the user purchases the product are denoted by the same symbols in Fig. 9, and redundant description is not repeated.

When the user accesses the sales machine 2 from the user terminal 1 through the proxy server 45 of the system management device 4 with a one-time ID and a one-time PW issued by an issuing portion 43 at a step S311, the accessed sales machine 2 posts the system management device 4 that the user has accessed the same with the one-time ID and the one-time PW at a step S12.

If the one-time ID and the one-time PW received from the sales machine 2 are a valid ID issued by the issuing portion 43 and a one-time PW corresponding thereto respectively, the system management device 4 posts information, included in personal information of the user corresponding to the one-time ID, other than that allowing specification of the user himself/herself to the sales machine 2 according to a personal information management portion 42 at a step S13.

When receiving the information other than that allowing specification of the user himself/herself from the system management device 4, the sales machine 2 provides a service suitable for the user through the proxy server 45 of the system management device 4 on the basis of the received information at a step S314. For example, the sales machine 2 can display advertisement of products likely to attract the user's interest on the basis of the user's purchase information and information about his/her hobby posted thereto.

If the user instructs the user terminal 1 to purchase any product from the sales machine 2 through the proxy server 45 at a step S315, the sales machine 2 requests the system management device 4 to pay for the product with the one-time ID and the one-time PW of the user purchasing the product at a step S16. The subsequent steps are similar to those shown in Fig. 5 carried out by the respective portions of the sales system 100 according to the aforementioned first embodiment when the user purchases the product.

The remaining structure of the third embodiment is similar to that of the aforementioned first embodiment.

According to the third embodiment, as hereinabove described, the system management device 4 is provided with the proxy server 45 connectable to the user terminal 1 and the sales machine 2 through the Internet 115 so that the user can purchase the product from the sales company through the Internet 110 with the one-time ID and the one-time PW issued by the issuing portion 43 in the state where the user terminal 1 is connected to the sales machine 2 through the proxy server 45. Thus, the sales company can be inhibited from specifying an identification number (IP address) of the user terminal 1 dissimilarly to a case where the user terminal 1 is connected to the sales machine 2 of the sales company without through the proxy server 45, whereby the sales company can be effectively inhibited from specifying the user himself/herself and accumulating his/her information on the basis of the IP address.

The remaining effects of the third embodiment are similar to those of the aforementioned first embodiment.

Although the present invention has been described and illustrated in detail, it is clearly understood that the same is by way of illustration and example only and is not to be taken by way of limitation, the spirit and scope of the present invention being limited only by the terms of the appended claims.

For example, while the sales system is so formed that the issuing portion serving as the issuing means according to the present invention issues both of the one-time ID (identification information) and the one-time PW (password) and the control portion serving as the payment request accepting means accepts the payment request made by the sales company with both of the one-time ID and the one-time PW in each of the aforementioned first to third embodiments, the present invention is not restricted to this. According to the present invention, the sales system may alternatively be so formed that the issuing means issues only the one-time ID and the payment request accepting means accepts the payment request made by the sales company with only the one-time ID. In other words, the sales system may be formed not to use the one-time PW.

While the sales system is so formed that the personal information management portion serving as the personal information management means discloses the user's information to the sales company when the user accesses the sales machine with both of the one-time ID and the one-time PW in each of the aforementioned first to third embodiments, the present invention is not restricted to this. According to the present invention, the sales system may alternatively be so formed that the personal information management means discloses the user's information to the sales company also when the user accesses the sales machine with only the one-time ID.

While the sales system is so formed that the control portion serving as the payment means pays for the product with the credit card on behalf of the user in each of the aforementioned first to third embodiments, the present invention is not restricted to this. According to the present invention, the sales system may alternatively be so formed that the user pays for the product in cash or he/she pays the money into the account of the sales company, for example, without using the credit card.

While the sales system is so formed that the control portion serving as the payment means pays for the product so that the user thereafter receives (acquires) the product in each of the aforementioned first to third embodiments, the present invention is not restricted to this. According to the present invention, the sales system may alternatively be so formed that the user first receives (acquires) the product and the payment means thereafter pays for the product.

While the sales system is so formed that the personal information management portion serving as the personal information management means entirely posts (discloses) the information authorized by the user as disclosable to the sales company if the credibility thereof is higher than the average while only partially posting (disclosing) the information authorized by the user as disclosable to the sales company if the credibility thereof is below the average in each of the aforementioned first to third embodiments, the present invention is not restricted to this. According to the present invention, the sales system may alternatively be so formed that the personal information management means sets priority to the information authorized by the user as disclosable to increase the quantity of disclosable information from that having high priority as the credibility of the sales company is increased, for example.

While the sales system is so formed that the user acquires the product by downloading the same with the user terminal in the aforementioned second embodiment, the present invention is not restricted to this. According to the present invention, the sales system may alternatively be so formed that the sales machine transmits the product to the user terminal.

## Claims

1. A sales system (100, 200, 300) comprising:
a user terminal (1);
a system management device (4) authenticating the user; and
a sales machine (2) of a sales company formed to be connectable to said user terminal through a network for selling a product to the user through said network (110), wherein
said system management device includes:
an issuing means (43) issuing a different one-time ID to the authenticated user every transaction,
a payment request accepting means (41) accepting a payment request when the user purchases said product from said sales company through said network with said one-time ID issued by said issuing means and said sales company makes said payment request for said purchased product with said one-time ID,
a payment means (41) paying for said purchased product on behalf of the user in response to said payment request accepted by said payment request accepting means, and
a personal information management means (42) managing personal information of the user in association with said one-time ID issued by said issuing means and disclosing information other than information allowing specification of the user himself/herself included in said personal information associated with said one-time ID to said sales company when the user accesses said sales company through said network with at least said one-time ID.

2. The sales system according to claim 1, wherein said issuing means issues a one-time password corresponding to said one-time ID to the authenticated user in addition to said one-time ID, and
said payment request accepting means is formed to accept said payment request when the user purchases said product from said sales company through said network with said one-time ID and said one-time password issued by said issuing means and said sales company makes said payment request for said purchased product with said one-time ID and said one-time password.

3. The sales system according to claim 1, so formed that the user selects information authorized as disclosable to said sales company by said personal information management means from said information other than said information allowing specification of the user himself/herself.

4. The sales system according to claim 3, wherein said personal information management means is formed to select information to be disclosed to said sales company from said information authorized by the user as disclosable, in response to credibility of said sales company based on a prescribed criterion.

5. The sales system according to claim 4, wherein said personal information management means is formed to select said information to be disclosed to said sales company from said information authorized by the user as disclosable on the basis of said credibility of said sales company based on at least evaluation by the user as said prescribed criterion.

6. The sales system according to claim 3, so formed that the user can change said information authorized as disclosable to said sales company in said information other than said information allowing specification of the user himself/herself.

7. The sales system according to claim 1, wherein said personal information management means is formed to manage said personal information including at least purchase information of the user and to accumulate said personal information including said purchase information.

8. The sales system according to claim 1, wherein said system management device further includes a destination information request accepting means (41) accepting a destination information request when a carrier for delivering said purchased product to the user acquires said one-time ID corresponding to said purchased product from said sales company and makes said destination information request about the destination of said purchased product with said one-time ID and a destination information posting means (41) posting destination information about said purchased product to said carrier in response to said destination information request accepted by said destination information request accepting means.

9. The sales system according to claim 8, so formed that said issuing means issues said one-time password corresponding to said one-time ID to said authenticated user in addition to said one-time ID while said destination information request accepting means accepts said payment information request made by said carrier for said purchased product with said one-time ID without employing said one-time password if said payment request accepting means accepts said payment request when the user purchases said product from said sales company through said network with said one-time ID and said one-time password issued by said issuing means and said sales company makes said payment request for said purchased product with said one-time ID and said one-time password.

10. The sales system according to claim 1, wherein said system management device further includes a proxy server (45) connectable to said user terminal and said sales machine through said network, and
the sales system is so formed that the user can purchase said product from said sales company through said network with at least said one-time ID issued by said issuing means in a state where said user terminal is connected to said sales machine through said proxy server.

11. The sales system according to claim 1, wherein said user terminal is so formed that the user can acquire said product, purchased from said sales company, from said sales machine through said network.

12. The sales system according to claim 1, wherein said issuing means of said system management device is formed to issue at least said one-time ID on the basis of an operation of the user selecting said sales company from a sales company selection screen of said system management device in the state authenticated by said system management device.

13. The sales system according to claim 12, wherein said issuing means of said system management device is formed to issue at least different said one-time ID every time the user selects different said sales company from said sales company selection screen of said system management device in the state authenticated by said system management device.

14. The sales system according to claim 1, wherein said one-time ID is usable only within a prescribed time from the issuance by said issuing means.

15. The sales system according to claim 14, wherein said one-time ID is rendered unusable when said system management device cancels the authentication of the user, even if said prescribed time has not yet elapsed.
